# EUROPEAN PATENT APPLICATION

(11) **EP 4 471 691 A1**
(43) Date of publication of application: **04.12.2024**
(21) Application number: 24179138.3
(22) Date of filing: 30.05.2024
(51) Int. Cl.: G06Q 10/0631

(54) **AGENTS FOR EXECUTING COMPLEX COMPUTING TASKS IN A COMPUTING PLATFORM**

(30) Priority: 02.06.2023 EP 23290020
(71) Applicant: Palantir Technologies Inc., Denver, CO 80202 (US)
(72) Inventor: NALLURU, Naga Sri Subhash, London (GB); SESE, Charles, Geneve (CH); TOFIK MOHAMMED, Yishak, New Jersey (US); RAHLE, Bruno, London (GB); GHARBI, Wiem, Zurich (CH); RAMMAL, Jaafar, London (GB); LEBBOS, Clara, London (GB)
(74) Representative: Jolliffe, Jack Louis

(57) **Abstract**

Methods, apparatuses and computer programs are for executing complex computing tasks in a computing platform are provided. According to one aspect, a method comprises receiving, by a planning agent, a use case input indicating an objective for completion in the computing platform. The planning agent decomposes, by the planning agent, the use case input into a plurality of tasks for achieving the objective. The planning agent provides each of the plurality of tasks to a respective task agent for execution. For each task of the plurality of tasks, the respective task agent identifies a tool suitable for performing the task from a plurality of tools. The task agent uses the identified tool to execute an operation corresponding to the respective task in the computing platform.

## Description

### Field of the disclosure

The present disclosure relates to methods, apparatuses, and computer programs for performing computing processes in a computing platform.

### Background

Computing platforms and operating systems can often provide a wide range of high-level functionality based on the combination and interaction of basic operations. A data processing platform, for example, may provide data processing and analysis capabilities based on operations including data ingestion, transformation, and ontology creation.

A user of a computing platform or operating system may be able to envisage or describe a particular objective in terms high level functionality of the system without knowledge of the more fundamental actions necessary to achieve the high-level objective.

Accordingly, there is a need for systems and methods that allow a user to provide flexible definition of complex computing processes in a particular computing platform or operating system without explicit reference to the basic operations of the computing platform or operating system.

### Summary of Invention

According to one aspect of the disclosure, a computer implemented method for executing complex computing tasks in a computing platform is provided. The method comprises:
receiving, by a planning agent, a use case input indicating an objective for completion in the computing platform;
decomposing, by the planning agent, the use case input into a plurality of tasks for achieving the objective;
providing, by the planning agent, each of the plurality of tasks to a respective task agent for execution;
for each task of the plurality of tasks:
   identifying, by the respective task agent, based on the task, a tool suitable for performing the task from a plurality of tools, and
   using the identified tool to execute an operation corresponding to the respective task in the computing platform.

In some examples, the planning agent is coupled to a first large language model, wherein the planning agent generates a use case prompt by combining the use case input with context information based on a planning prompt template; wherein the planning agent provides the use case prompt to the first large language model; and wherein the first large language model provides the plurality of tasks for achieving the objective to the planning agent in response to the use case prompt.

In some examples, the use case input comprises a natural language description of the objective for completion in the computing platform, and the planning context information comprises: a description of a plurality of task types that can be performed on the computing platform, and an indication that the first computing model should provide as an output a series of tasks required to complete the objective described in the use case input and that each task must belong to one of the task types.

In some examples, the plurality of task types includes one or more of: a data integration task, a pipeline builder task, an object type task, an object link task, and an object action task.

In some examples, each task agent is coupled to a second large language model, wherein each task agent generates a respective task prompt by combining the task with task context information based on a task prompt template, and wherein each task agent provides the respective task prompt to the second large language model.

In some examples, the task comprises a description of an operation to be performed in the computing platform and task parameters extracted from the use case input, and the task context information includes: for each tool of a plurality of tools: a description of the operations that are performed by the tool in the computing platform, an indication of suitable inputs for the tool, and an indication of expected outputs for the tool; and an indication that the second large language model should provide as an output an identification of a tool capable of performing the operation in the computing platform an indication of one or more tool inputs for identified tool in order to perform the operation.

In some examples, the computer implemented method further comprises: building, by the planning agent, a directed dependency graph of the plurality of tasks based on dependencies between the tasks of the plurality of tasks, and scheduling execution of the tasks based on the directed dependency graph.

In some examples, the planning context information includes a description of the dependencies of different task types.

In some examples, a first task is dependent on a second task, and the planning agent provides the first task to the respective task agent based on execution of the second task being completed.

In some examples, the computer implemented method further comprises: identifying tasks that can be performed in parallel and executing the identified tasks in parallel.

In some examples, the computer implemented method further comprises: determining, by the planning agent, that further information is required for execution of one or more tasks of the plurality of tasks; providing, by the planning agent, a user prompt to a user device requesting a user input indicating the required further information; and receiving the user input including the required further information, wherein providing the one or more tasks to a respective task agent for execution is performed based on receiving the user input.

In some examples, the computer implemented method further comprises: determining that one or more tasks of the plurality of tasks includes a prohibited action, and preventing the one or more tasks from being executed.

In some examples, the computer implemented method further comprises: updating the planning prompt template to include a description of a new type of task; and updating the task prompt template to provide a description of a new tool.

In another aspect of the disclosure, a non-transitory computer readable medium is provided. The non-transitory computer readable medium comprises instructions that, when executed, cause one or more processors of a computing system to perform the method of the first aspect.

In another aspect of the disclosure, an apparatus is provided. The apparatus comprises one or more processors; and a memory storing instructions that, when executed by the one or more processors, cause the apparatus to perform the method of the first aspect.

### Brief Description of the Figures

Example embodiments will now be described by way of non-limiting example with reference to the accompanying drawings, in which:
FIG. 1 is a schematic illustration of functional elements of embodiments of the present disclosure;
FIG. 2 is a flow diagram showing processing operations that may be performed in accordance with example embodiments;
FIG. 3 is a schematic illustration of a flow of data from a user input to operations in the computing platform according to embodiments;
FIG. 4 is a schematic illustration of a process of generating a use case prompt based on a use case input and a planning prompt template according to embodiments of the disclosure;
FIG. 5 is a schematic illustration of the process of generating a task prompt based on a task description and a task description template;
FIG. 6 shows a block diagram of an exemplary computer system for use in some embodiments.

### Detailed Description

Example embodiments relate to methods, systems and computer programs for executing complex computing tasks in a computing platform.

A computing platform may provide a plurality of simple operations or actions native to the platform. A complex computing task in the present disclosure is a computing task that requires multiple operations, processes or steps to be performed in the computing platform for the task to be completed.

In the embodiments of the present disclosure, agents are provided to generate and execute tasks corresponding to basic operations of a computing platform based on an input that does not explicitly refer to basic operations of a computing platform. The agents may leverage the natural language capabilities of large language models (LLMs) as a bridge between a natural language input and the native operations of a computing platform.

In the described embodiments, the computing platform may be a data processing platform. Where the computing platform is a data processing platform, the operations that make up a complex task may include actions or the generation of artifacts, including generating datasets, Pipeline Builder pipelines, transforms, Ontology objects, links or other artifacts in the data processing platform.

A user of the computing platform may be aware of high-level functionality of the computing platform without understanding how basic operations native to the computing platform can be combined to achieve a particular desired high-level objective. Furthermore, when a user does understand the necessary basic operations required to implement a high-level objective, the process of assembling and executing the necessary operations may be time consuming and onerous.

Embodiments of the disclosure provide systems and methods in which complex functionality requiring the execution of several basic operations of a computing platform is achieved based on a use case input indicating an objective to be achieved in the computing platform. The objective may describe an outcome in terms of high-level functionality of the computing platform 102 without explicitly referring to operations. Examples of objectives in a data processing platform may include building a dashboard based on specified data sources, solving issues encountered in an existing data structure, writing an authoring transform, or building a complex custom use case.

In some embodiments, the use case input may be a natural language input comprising a text string defining an objective in natural language. The natural language input maybe typed into a user interface of the computing device or be provided as spoken language recorded by a microphone. For example, the natural language input may comprise a description of an objective for a specific computing platform in written English.

Based on the use case input, embodiments may identify and execute operations in the computing platform to achieve the indicated objective. In the described embodiments, agents are used to plan and execute operations in the computing platform based on a use case input. In the present disclosure, agents refer to computing programmes that include chains of computing functions that are linked together and in which the path of the chain is dependent on an input. An agent may have access to an artificial intelligence model or machine learning model, such as a large language model (LLM), as part of an execution chain to provide a bridge between a natural language input (or another input that does not explicitly define operations native to the computing platform) and computing operations that can be performed on the computing platform. An LLM may be an LLM trained on publicly available data without fine tuning for the purposes of the invention, such as an instance of an LLM in accordance with OpenAI's GPT series. While the use of LLMs are described in the following detailed description, the skilled person will understand that other artificial intelligence models and machine learning models may be used in place of the LLMs described herein.

An agent may be coupled to further tools that allow the LLM to access and interact with external services. In particular, an agent may provide a prompt to an LLM causing the LLM to select a tool in order to interact with one or more services to perform operations in the computing platform or to directly perform operations in the computing platform. In the present disclosure, a tool may be a callable computing function that provides an output based on a received input. The tool may, for example, provide a series of API calls to different services in order to perform an operation in the computing platform.

For example, where the computing platform is a data processing platform in accordance with disclosed embodiments, the agent may use a tool to perform a series of API calls in response to an input in order to perform one or more operations including: generating datasets, generating pipeline builder pipelines, generating transforms, generating ontology objects, and generating links or other artifacts in the data processing platform.

In embodiments of the disclosure, a planning agent may receive a use case input from a user indicating an objective for completion in the computing platform. The planning agent decomposes the use case input into a plurality of tasks for achieving the objective. The planning agent provides each of the plurality of tasks to a respective task agent for execution. Each task agent identifies a tool suitable for performing the task in the computing platform based on the task. Each task agent uses the respective identified tool to execute an operation corresponding to the respective task in the computing platform. By executing the tasks corresponding to the decomposed use case input, operations are performed in the computing platform to achieve the objective indicated in the use case input.

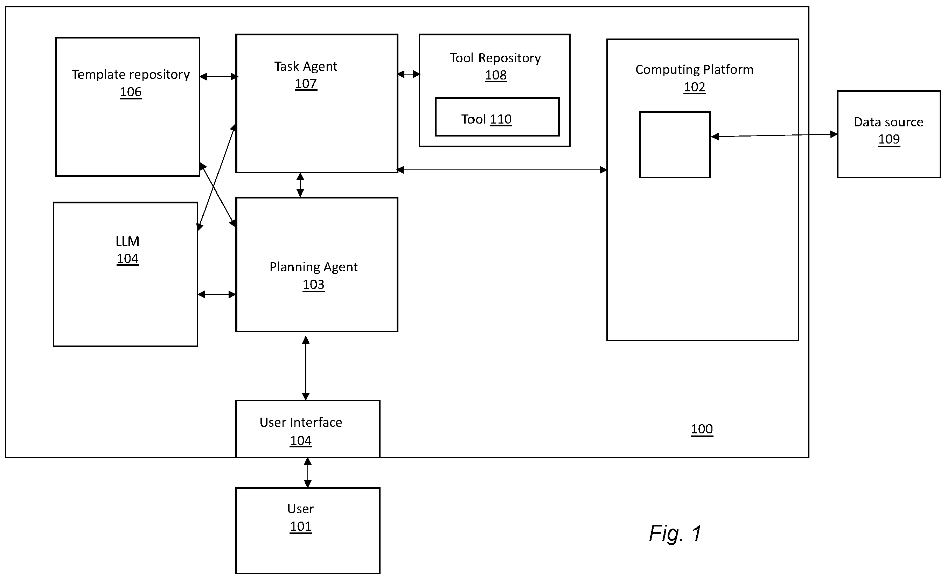

Fig. 1 provides a schematic illustration of functional elements of embodiments of the present disclosure. In embodiments of the present disclosure, a planning agent 103 receives use case inputs. A user 101 may provide the use case input defining an objective in the computing platform 102 to a computing system 100 via a user interface. The planning agent 103 decomposes the use case input into a plurality of tasks for achieving the objective in the computing platform 102.

In order to decompose the use case input into a plurality of tasks, the planning agent 103 may generate a use case prompt based on the use case input and provide the use case prompt to a first large language model (LLM) 104. The use case prompt may include the use case input defining the objective and a planning prompt template providing planning context information to the first LLM 104 in natural language. For example, the planning context information of the use case template may include one or more of a description of the computing platform 102, a description of a plurality of operations that can be performed on the platform, a description of the dependencies of the operations that can be performed on the platform, and an indication that the first LLM 104 is required to provide as an output a plurality of tasks suitable for achieving the objective when performed in the computing platform. In some embodiments, the planning context information may include examples of how to achieve particular example objectives in the computing platform using basic operations of the computing platform. In some examples, the use case input and the use case template both have the form of strings of text, and the use case prompt is generated by concatenating the string of text of the use case input and the use case template. The planning agent may retrieve the use case template from a template repository 106 storing different template examples.

In other embodiments, the first LLM 104 may be fine-tuned to provide a decomposition of a use case into tasks based on a use case prompt comprising the use case input without additional context information. Fine-tuning the first LLM may involve performing training using supervised learning, transfer learning, or reinforcement learning. In other embodiments, the planning agent 103 may use a computing model other than an LLM to decompose the use case prompt into a plurality of tasks, such as another artificial intelligence model or machine learning model.

Each task may include information defining a task type and a description of the task including task parameters relating to the particular task extracted from the use case input. Where the computing platform 102 is a data processing platform, the task type can be one of: a data integration task, a pipeline builder task, an object type task, an object link task and an object action task.

The task parameters relating to the particular task may include an indication of a particular data source 109 or the identification of a particular object. For example, where a use case input describes an outcome that relies on a particular data source 109, the first LLM may provide a decomposition of a use case input into a plurality of tasks where one task is a data integration task including a task parameter identifying the specified data source 109.

In some embodiments, each task includes an ID that is used to identify the task and retrieve the output for the task from a JSON file (or other suitable file) when the task agent has finished executing the task.

In some embodiments, each task includes a status that indicates whether the task has not started, is currently running, has succeeded, has failed, or has stalled as it needs further user input.

In some embodiments, each task includes an output dictionary containing the output for that task.

In some embodiments, each task includes a task history containing the description of the task as well as any further user provided inputs that were required to successfully execute the task.

In some embodiments, each task includes a list of tasks that the task depends on.

In some embodiments, each task may be stored in a file readable by the planning agent and the task agent. The file in which the task is stored may include one or more of: a description of the task, task parameters relating to the task, and a status of the task.

Decomposing a use case input into a plurality of tasks may comprise building a directed dependency graph of the plurality of tasks based on dependencies between the tasks of the plurality of tasks. The directed dependency graph indicates which other tasks must be completed before execution of a given task can begin. Tasks upon which other tasks are dependent are prioritized. Tasks that can be performed in parallel are identified, and task agents may be instructed to execute the identified tasks in parallel.

In addition to decomposing a use case input into a plurality of tasks, the planning agent may also determine a schedule for execution of the plurality of tasks. Determining a schedule for execution of tasks may include building a directed dependency graph of the plurality of tasks based on dependencies between the tasks of the plurality of tasks. The directed dependency graph indicates which other tasks must be completed before execution of a given task can begin. Tasks upon which other tasks are dependent are prioritized. Tasks that can be performed in parallel are identified, and task agents may be instructed to execute the identified tasks in parallel.

Examples of dependencies in the data processing platform of some embodiments include: data transform tasks are dependent on data ingestion tasks (i.e. data must be ingested before it can be transformed), object link tasks are dependent on object creation tasks (i.e. objects must be created before links between the objects can be created).

In some embodiments, building the directed dependency graph is achieved by providing the first LLM with a prompt including a natural language description of the dependencies of different task types (or the dependencies of different basic operations of the computing platform corresponding to different task types), the plurality of tasks that the computing platform can achieve directly (or the plurality of basic operations of the computing platform), and an indication that the planning LLM should output a dependency graph for the plurality of tasks. In some examples, the use case prompt may include context information causing the first LLM to build the directed dependency graph.

Each task may include a task description, information defining the task type, and task parameters. The task description may be generated by the planning agent 103 and provided to a task agent 107 for execution. The planning agent may request user input confirming the task details before providing the task to the task agent for execution. The planning agent may request further user input to provide additional information required for execution of the task. Tasks may be provided to the task agent in accordance with the task schedule. Where a task is dependent on completion of other tasks, the planning agent may determine that all other tasks necessary for execution of the task have been completed prior to providing the task to the task agent. The planning agent may, in some embodiments, determine that additional planning agents may be required for the successful execution of the input description it receives.

The task agent 107 is coupled to a second LLM 104. The task agent generates a task prompt based on the task and provides it to the second LLM. Based on the task prompt, the second LLM provides as an output an identification of a tool for executing the task and input parameters for the tool.

The second LLM may be another instance of the same LLM used by the planning agent. In Fig. 1 the first and second LLM are shown as the same functional block. In embodiments where the first and second LLMs are finely-tuned for use with the planning agent and task agent respectively, the first and second LLMs are different to each other.

The task prompt may include one or more of: the task description, the information defining the task type and the task parameters generated by the planning agent 103 in response to the use case input. The task prompt may be generated by combining the some or all of the task (such as the information defining the task type and the task parameters) with a task prompt template. The task prompt template may be retrieved by the task agent 107 from the template repository 106.

The task prompt template includes task context information providing a description of a plurality of tools that the task agent has access to. The description of the plurality of tools may include an indication of what each tool achieves. The description of the plurality of tools may include an explanation or examples of suitable forms for inputs for each tool and expected outputs for each tool. The context information of the task prompt may define the computing platform 102 as its environment and describes concepts relevant to the specified computing platform. For example, when the computing platform is a data processing platform, the task context information in the task prompt includes text explaining concepts of the particular data processing platform, such as RIDs, datasets and transforms, in natural language. The task context information of the task prompt may include an indication that the second LLM should identify a tool suitable for performing an operation that accomplishes an action or generates an artifact in the computing platform that corresponds to the task and should provide an output including an indication of the selected tool to the task agent. The context information may indicate that the output of the second LLM should include tool input parameters necessary for executing a task using the identified tool, with the tool input parameters being extracted from the task. The context information may also indicate that where the LLM is unable to identify a suitable tool or task parameter with certainty, it should provide an indication that the task agent should request further information from the user.

In other embodiments, the second LLM model may be fine-tuned to select a tool and return suitable tool input parameters based on the task without additional context information. Fine-tuning the second LLM may involve performing training using supervised learning, transfer learning, or reinforcement learning.

Based on receiving an identification of a tool and tool input parameters from the second LLM, the task agent may execute a task by executing the identified tool in accordance with the provided tool input parameters. Execution of the tool completes an operation on the computing platform in accordance with the tool and the input. Each tool may comprise callable functions that stitch together a series of API calls to define a request path that accomplishes a given operation in the computing platform. The callable functions may, for example, be callable python functions.

Execution of each task of the plurality of tasks results in the objective of the use case input being implemented in the computing platform through the execution of basic operations of the computing platform.

In embodiments of the invention, a tool repository 108 includes a plurality of tools that the task agent can access. In some embodiments, additional tools can be provided to the tool repository 108 to allow further operations to be performed in the computing platform 102. When an additional tool is added to the tool repository, the task prompt template may be updated to include a description of the new tool. In some embodiments, a task prompt template is generated based on an indication of a set of tools that may be required by the planning agent.

In some embodiments, the task agent has access to one or more of the following tools:

### Data Ingestion

Dataset Uploader Tool - A tool able to perform operations to upload a file to create a dataset.

### Transformation

Pipeline Builder Transforms Tool - A tool able to perform operations including bundling pipeline instance creation with description-based transform generation and publishing of these changes into a single pipeline.

### Ontology

Ontology Object Type Generator Tool - A tool able to perform operations for defining and creating Ontology Object Types given a dataset and a primary key
Ontology Object Link Generator Tool - A tool able to perform operations defining and creating Ontology Link Types between different Object Types
Ontology Action Creation Tool - A tool able to perform operations for creating ontology actions.

Preferably, an instance of the task agent is constructed to perform a two-step process to maximize deterministic behaviour.

In the first step, the task agent identifies a tool and executes the given task. Deterministic input for the tools is ensured by providing a task prompt template that mandates a structured format, such strict JSON structures , YAML structures or another suitable format. Examples may be included in the task prompt template to indicate the permitted format structures.

In the second step, the task agent generates a structured response based on the results of the execution. This may involve requiring that the task agent calls a further tool at the end of every task execution so that all necessary responses are communicated to a file that can be read by listeners.

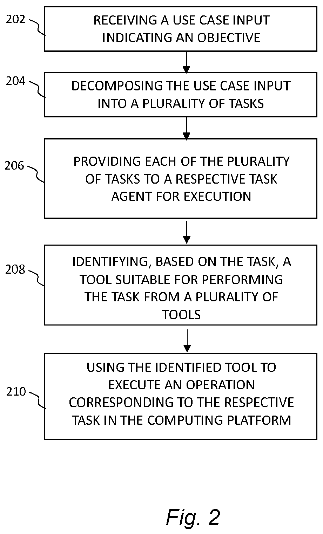

In some embodiments, the system may be provided with "guard rails" to prevent unexpected behaviour. For example, the system may include hard coded prohibitions on certain actions to be performed by the task agent. When a new planning agent and task agent are instantiated, the system may require human input to approve every operation performed by the system. If a system is observed to operate without attempting to perform prohibited actions for a sufficient period of time or number of actions, the requirement for human input may be removed. If a system is observed to frequently attempt prohibited actions, the planning prompt template and task prompt template may be modified to reduce the likelihood of attempted prohibited actions. FIG. 2 is a flow diagram showing processing operations that may be performed in accordance with one or more example embodiments. The processing operations may be performed using hardware, software, firmware or a combination thereof.

A first operation 202 may comprise receiving a use case input indicating an objective. The use case input indicates an objective for completion in the computing platform and may be received by a planning agent. The use case input may, for example, be a written description of an objective provided by a user in the form of written text.

A second operation 204 may comprise decomposing the use case input into a plurality of tasks. The second operation may be performed by a planning agent. Each of the plurality of tasks may be tasks that can be performed using a single tool of a plurality of tools. Prior to proceeding to a third operation, the planning agent may request user input confirming that the decomposition of the use case input into a plurality of tasks is correct. The planning agent may request user input to provide further information necessary to decompose the use case into a plurality of tasks. For example, the planning agent may indicate that it requires an RID for a parent folder to which data can be uploaded during a data ingestion task. Upon receipt of a user input in response to the planning agent's request, the method may proceed to the third operation.

The third operation 206 a third operation may comprise providing each of the plurality of tasks to a respective task agent for execution. Providing tasks to the task agent may include providing a text description of the task to the respective task agent. The third operation may be performed by the planning agent.

A fourth operation 208 may comprise identifying, based on the task, a tool suitable for performing the task from a plurality of tools. The fourth operation may be performed by a task agent. Identifying the suitable tool may comprise using an LLM to identify a suitable tool based on the task and a description of available tools in a tool repository. The fourth operation may be performed separately for each task of a plurality of tasks generated in the second operation. During the fourth operation, the task agent may request user input to indicate a tool or suitable input parameters for an identified tool.

A fifth operation 210 may comprise using the identified tool to execute an operation corresponding to the respective task in the computing platform. The fifth operation may be performed by the task agent. Using the identified tool may include executing a callable function that stitches together a series of API calls to define a request path that accomplishes a given operation in the computing platform.

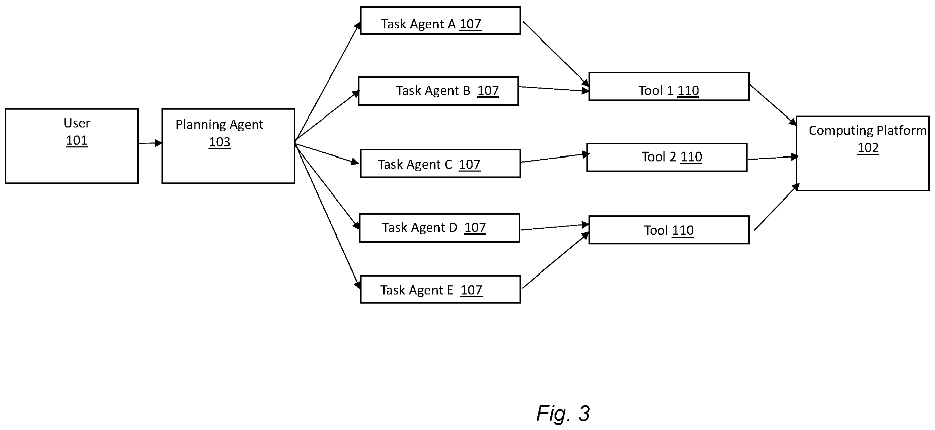

Fig. 3 schematically illustrates a flow of data from a user input to operations in the computing platform. A user 101 provides a use case input to the planning agent. The planning agent generates a plurality of tasks based on the use case input. Each task is provided to a task agent 107. Each task agent identifies a tool 110 based on the description of the task. The identified tool 110 is used to perform an operation on the computing platform.

In an illustrative example, the use case input may indicate that the user wishes to generate an alert when data from a first sensor stored at a first data source is greater than a certain threshold. A use case prompt is generated by a planning agent based on the use case input and a planning template. Based on the use case prompt, the first LLM may output a plurality of tasks including a first task relating to the creation of an object corresponding to the sensor and a second task relating to ingestion of data relating to the sensor. The first LLM may build a directed dependency graph indicating that ingestion of the data must be performed subsequent to creation of an object corresponding to the sensor. Building of the directed dependency graph may be performed during decomposition of the use case input into a plurality of tasks. The first task may be provided to the task agent. The task agent may determine that an Ontology Object Type Generator Tool is suitable for executing the first task and execute the task using the identified tool. Upon determining that execution of the first task is complete, the planning agent may provide the second task to the task agent for execution. The task agent may determine that a Dataset Uploader Tool is suitable for performing the second task and may determine that an identifier of the first database and a file name for the first sensor data are required as inputs for the Dataset Uploader tool as tool input parameters. The task agent may then extract an identifier of the first database and a file name for the first sensor data from the second task and provide these to the Dataset Uploader tool for execution. Further tasks may define tasks resulting in the generation of alert parameters, such as the generation of further objects linked to the object corresponding to the sensor.

In some embodiments, the actions of the planning agent and task agent may be performed iteratively. For example, in some embodiments, each time a task is completed by the task agent, the planning agent produces a new use case prompt in which a list of completed tasks are included in the context information. In these embodiments, the planning agent may generate new plurality of tasks based on the new use case prompt.

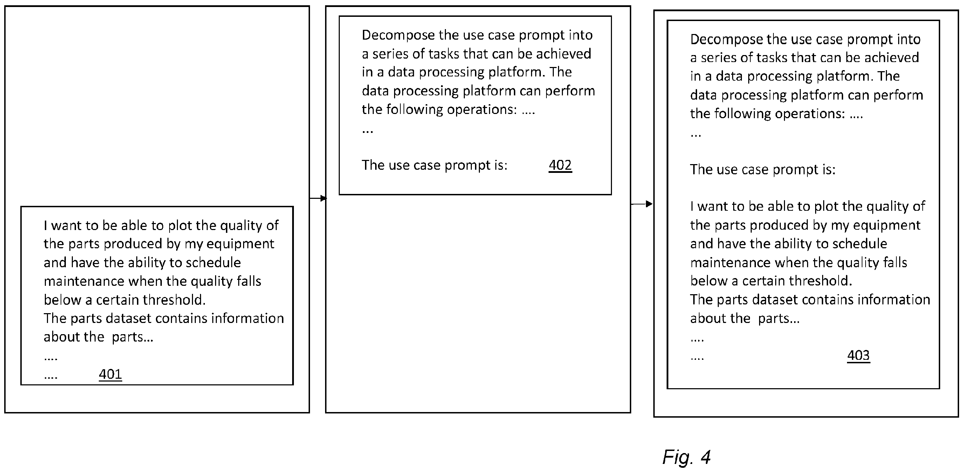

Fig. 4 provides a schematic illustration of the process of generating a use case prompt 403 based on a use case input 401 and a planning prompt template 402. The illustrated figure provides segments of text that could form part of the use case input 401, use case template 402 and use case prompt 403 in embodiments of the disclosure.

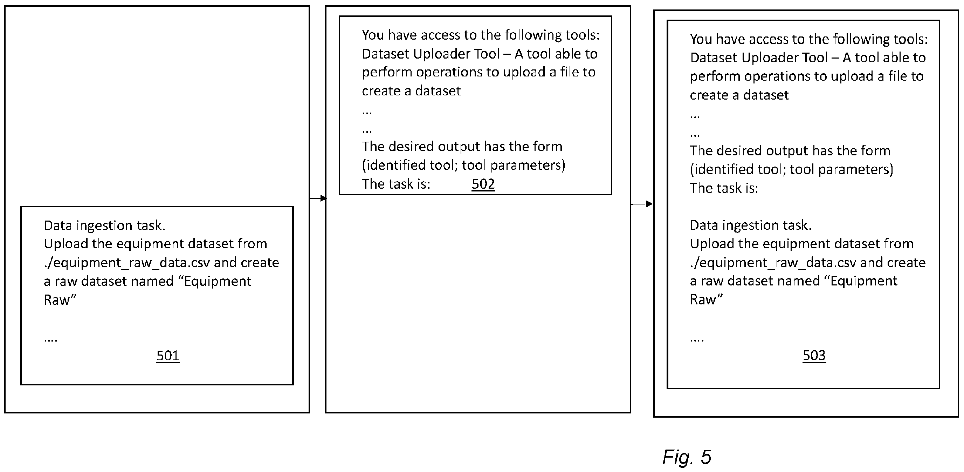

Fig. 5 provides a schematic illustration of the process of generating a task prompt 503 based on a task description 501 and a task prompt template 502. The illustrated figure provides segments of text that could form part of the task description 501, task prompt template 502 and task prompt 503 in embodiments of the disclosure.

In some examples, the planning prompt templates, and the task prompt templates may be generated using an artificial intelligence model, and may include supervised learning or reinforcement learning. In some embodiments, the planning prompt templates may be generated by providing a template generating artificial intelligence model with examples of use case inputs, and examples of decompositions of the example use case inputs into tasks. In some embodiments, the task prompt templates may be generated by providing a template generating artificial intelligence model with examples of tasks and examples of identifications of tools and tool parameters. The template generating artificial intelligence model may be a large language model.

In some embodiments, use case templates and task templates may be generated for particular a user to incorporate aspects of the user's existing applications and/or ontology objects.

The above described embodiments provide systems and methods that allow complex technical computing tasks to be performed based on simple inputs. The described embodiments are advantageous over known embodiments in that they provide for the performance of technical computing tasks that would not be possible based on the provided inputs using previously known methods. The systems and methods also advantageously provide efficient identification and execution of tasks that allow complex technical computing operations to be performed with efficient use of computing resources.

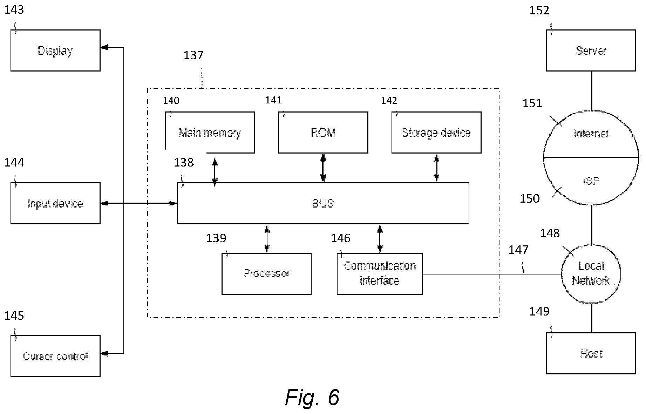

Fig. 6 shows a block diagram of an exemplary computer system 137, which may comprise the data processing platform 102, and one or more of the servers hosting the data processing platform, the planning agent 103 and the task agent 107, consistent with examples of the present specification is shown.

Computer system 137 includes a bus 138 or other communication mechanism for communicating information, and a hardware processor 139 coupled with bus 138 for processing information. Hardware processor 139 can be, for example, a general purpose microprocessor. Hardware processor 139 comprises electrical circuitry.

Computer system 137 includes a main memory 140, such as a random access memory (RAM) or other dynamic storage device, which is coupled to the bus 138 for storing information and instructions to be executed by processor 139. The main memory 140 can also be used for storing temporary variables or other intermediate information during execution of instructions by the processor 139. Such instructions, when stored in non-transitory storage media accessible to the processor 139, render the computer system 137 into a special-purpose machine that is customized to perform the operations specified in the instructions.

Computer system 137 further includes a read only memory (ROM) 141 or other static storage device coupled to the bus 138 for storing static information and instructions for the processor 139. A storage device 142, such as a magnetic disk or optical disk, is provided and coupled to the bus 138 for storing information and instructions.

Computer system 137 can be coupled via the bus 138 to a display 143, such as a cathode ray tube (CRT), liquid crystal display, or touch screen, for displaying information to a user. An input device 144, including alphanumeric and other keys, is coupled to the bus 138 for communicating information and command selections to the processor 139. Another type of user input device is cursor control 145, for example using a mouse, a trackball, or cursor direction keys for communicating direction information and command selections to the processor 139 and for controlling cursor movement on the display 143. The input device typically has two degrees of freedom in two axes, a first axis (for example, x) and a second axis (for example, y), that allows the device to specify positions in a plane.

Computer system 137 can implement the techniques described herein using customized hard-wired logic, one or more ASICs or FPGAs, firmware and/or program logic which in combination with the computer system causes or programs computer system 137 to be a special-purpose machine. According to some embodiments, the operations, functionalities, and techniques disclosed herein are performed by computer system 137 in response to the processor 139 executing one or more sequences of one or more instructions contained in the main memory 140. Such instructions can be read into the main memory 140 from another storage medium, such as storage device 142. Execution of the sequences of instructions contained in main memory 140 causes the processor 139 to perform the process steps described herein. In alternative embodiments, hard-wired circuitry can be used in place of or in combination with software instructions.

The term "storage media" as used herein refers to any non-transitory media that stores data and/or instructions that cause a machine to operate in a specific fashion. Such storage media can comprise non-volatile media and/or volatile media. Non-volatile media includes, for example, optical or magnetic disks, such as storage device 142. Volatile media includes dynamic memory, such as main memory 140. Common forms of storage media include, for example, a floppy disk, a flexible disk, hard disk, solid state drive, magnetic tape, or any other magnetic data storage medium, a CD-ROM, any other optical data storage medium, any physical medium with patterns of holes, a RAM, a PROM, and EPROM, a FLASH-EPROM, NVRAM, any other memory chip or cartridge.

Storage media is distinct from, but can be used in conjunction with, transmission media. Transmission media participates in transferring information between storage media. For example, transmission media includes coaxial cables, copper wire and fibre optics, including the wires that comprise bus 138. Transmission media can also take the form of acoustic or light waves, such as those generated during radio-wave and infra-red data communications.

Various forms of media can be involved in carrying one or more sequences of one or more instructions to processor 139 for execution. For example, the instructions can initially be carried on a magnetic disk or solid state drive of a remote computer. The remote computer can load the instructions into its dynamic memory and send the instructions over a telephone line or other transmission medium using a modem. A modem local to computer system 137 can receive the data on the telephone line or other transmission medium and use an infra-red transmitter to convert the data to an infra-red signal. An infra-red detector can receive the data carried in the infra-red signal and appropriate circuitry can place the data on bus 138. Bus 138 carries the data to the main memory 140, from which the processor 139 retrieves and executes the instructions. The instructions received by the main memory 140 can optionally be stored on the storage device 142 either before or after execution by the processor 139.

Computer system 137 also includes a communication interface 146 coupled to the bus 138. The communication interface 146 provides a two-way data communication coupling to a network link 147 that is connected to a local network 148. For example, the communication interface 146 can be an integrated services digital network (ISDN) card, cable modem, satellite modem, or a modem to provide a data communication connection to a corresponding type of telephone line. As another example, the communication interface 146 can be a local area network (LAN) card to provide a data communication connection to a compatible LAN. Wireless links can also be implemented. In any such implementation, the communication interface 146 sends and receives electrical, electromagnetic or optical signals that carry digital data streams representing various types of information.

The network link 147 typically provides data communication through one or more networks to other data devices. For example, the network link 147 can provide a connection through the local network 148 to a host computer 149 or to data equipment operated by an Internet Service Provider (ISP) 150. The ISP 150 in turn provides data communication services through the world wide packet data communication network now commonly referred to as the "Internet" 151. The local network 148 and internet 151 both use electrical, electromagnetic or optical signals that carry digital data streams. The signals through the various networks and the signals on the network link 147 and through the communication interface 146, which carry the digital data to and from the computer system 137, are example forms of transmission media.

The computer system 137 can send messages and receive data, including program code, through the network(s), network link 147 and communication interface 146.

## Claims

1. A computer implemented method for executing complex computing tasks in a computing platform, the method comprising:
receiving, by a planning agent, a use case input indicating an objective for completion in the computing platform;
decomposing, by the planning agent, the use case input into a plurality of tasks for achieving the objective;
providing, by the planning agent, each of the plurality of tasks to a respective task agent for execution;
for each task of the plurality of tasks:
identifying, by the respective task agent, based on the task, a tool suitable for performing the task from a plurality of tools, and
using the identified tool to execute an operation corresponding to the respective task in the computing platform.

2. The computer implemented method of claim 1, wherein the planning agent is coupled to a first large language model,
wherein the planning agent generates a use case prompt by combining the use case input with context information based on a planning prompt template;
wherein the planning agent provides the use case prompt to the first large language model; and
wherein the first large language model provides the plurality of tasks for achieving the objective to the planning agent in response to the use case prompt.

3. The computer implemented method of claim 2, wherein:
the use case input comprises a natural language description of the objective for completion in the computing platform, and
the planning context information comprises:
a description of a plurality of task types that can be performed on the computing platform, and
an indication that the first computing model should provide as an output a series of tasks required to complete the objective described in the use case input and that each task must belong to one of the task types.

4. The computer implemented method of claim 3, wherein the plurality of task types includes one or more of: a data integration task, a pipeline builder task, an object type task, an object link task, and an object action task.

5. The computer implemented method of any preceding claim,
wherein each task agent is coupled to a second large language model,
wherein each task agent generates a respective task prompt by combining the task with task context information based on a task prompt template, and
wherein each task agent provides the respective task prompt to the second large language model.

6. The computer implemented method of claim 5, wherein:
the task comprises a description of an operation to be performed in the computing platform and task parameters extracted from the use case input, and
the task context information includes:
for each tool of a plurality of tools:
a description of the operations that are performed by the tool in the computing platform, an indication of suitable inputs for the tool, and an indication of expected outputs for the tool; and
an indication that the second large language model should provide as an output an identification of a tool capable of performing the operation in the computing platform an indication of one or more tool inputs for identified tool in order to perform the operation.

7. The computer implemented method of any preceding claim, further comprising:
building, by the planning agent, a directed dependency graph of the plurality of tasks based on dependencies between the tasks of the plurality of tasks, and
scheduling execution of the tasks based on the directed dependency graph.

8. The computer implemented method of claim 7, wherein the planning context information includes a description of the dependencies of different task types.

9. The computer implemented method of claim 7 or claim 8,
wherein a first task is dependent on a second task, and
wherein the planning agent provides the first task to the respective task agent based on execution of the second task being completed.

10. The computer implemented method of claim 7 or claim 8, further comprising: identifying tasks that can be performed in parallel and executing the identified tasks in parallel.

11. The computer implemented method of any preceding claim, further comprising:
determining, by the planning agent, that further information is required for execution of one or more tasks of the plurality of tasks;
providing, by the planning agent, a user prompt to a user device requesting a user input indicating the required further information; and
receiving the user input including the required further information, wherein
providing the one or more tasks to a respective task agent for execution is performed based on receiving the user input.

12. The computer implemented method of any preceding claim, further comprising:
determining that one or more tasks of the plurality of tasks includes a prohibited action, and
preventing the one or more tasks from being executed.

13. The computer implemented method of any preceding claim, further comprising:
updating the planning prompt template to include a description of a new type of task; and
updating the task prompt template to provide a description of a new tool.

14. A non-transitory computer readable medium comprising instructions that, when executed, cause one or more processors of a computing system to perform the method of any of claims 1 to 13.

15. An apparatus comprising:
one or more processors; and
a memory storing instructions that, when executed by the one or more processors, cause the apparatus to perform the method of any of claims 1 to 13.
